# EUROPÄISCHE PATENTSCHRIFT

(11) **EP 0 839 698 B1**
(45) Veröffentlichungstag und Bekanntmachung des Hinweises auf die Patenterteilung: **14.08.2002**
(21) Anmeldenummer: 97117847.0
(22) Anmeldetag: 15.10.1997
(51) Int. Cl.: B60R 25/10

(54) **Verfahren und Vorrichtung zur Diebstahlmeldung für ein Kraftfahrzeug**
Vehicle theft reporting method and apparatus
Dispositif et procédé de signalisation du vol d'un véhicule.

(30) Priorität: 29.10.1996 DE 19644879
(43) Veröffentlichungstag der Anmeldung: 06.05.1998
(73) Patentinhaber: DaimlerChrysler AG, 70567 Stuttgart (DE)
(72) Erfinder: Dilz, Bernhardt, 71067 Sindelfingen (DE); Kollbach, Dietbert, 73733 Esslingen (DE); Robitschko, Peter, 71069 Sindelfingen (DE)

(56) Entgegenhaltungen:
- FR-A- 2 523 340
- GB-A- 2 012 092
- US-A- 5 181 010

## Beschreibung

Die Erfindung bezieht sich auf ein Verfahren und eine Vorrichtung zur Diebstahlmeldung für ein Kraftfahrzeug, bei denen eine Diebstahlmeldeinformation in Abhängigkeit vom Signalzustand wenigstens eines von mehreren fahrzeugzustandsindikativen Signalen erzeugt wird, die von entsprechenden Fahrzeugzuständsüberwachungsmitteln abgegeben werden. Mit Diebstahl soll dabei vorliegend zur begrifflichen Vereinfachung nicht nur ein unbefugtes Entwenden des Fahrzeugs, sondern auch bereits ein unbefugter Zutrittsversuch zum Fahrzeug verstanden werden. Unter dem Begriff Fahrzeugzustandsüberwachungsmittel sind die fahrzeugseitigen Bauteile zu verstehen, die anhand der von ihnen abgegebenen Signale eine jeweilige Teilinformation über den momentanen Fahrzeugzustand liefern. Hierunter fallen insbesondere Sensoren zur Erkennung unberechtigter Manipulationen an einer Fremdzugangsschutzeinrichtung, z.B. in Form einer Zentralverriegelungsanlage, und/oder einer Fremdnutzungsschutzeinrichtung, z.B. in Form einer elektronischen Wegfahrsperre, sowie Fahrzeugkomponenten, die fahrzeugbetriebsrelevante Signale erzeugen, z.B. ein Zündleitungssignal, ein Kraftstoffpumpensignal, Signale von Raddrehzahlsensoren etc..

Verfahren und Vorrichtungen dieser Art sind in vielfältiger Form für moderne Kraftfahrzeuge geläufig. Die bei Erkennen eines Diebstahlversuchs, d.h. eines Aufbruch- und/oder Entwendungsversuchs, erzeugte Diebstahlmeldeinformation wird dabei üblicherweise dazu verwendet, ein am Fahrzeug angeordnetes Alarmsystem auszulösen. Es sind auch bereits Systeme bekannt, bei denen die Diebstahlmeldeinformation, vorzugsweise zusätzlich zur Auslösung eines fahrzeugseitigen Alarmsignals, über eine drahtlose Signalübertragungsstrecke an eine Überwachungsstelle außerhalb des Fahrzeugs übermittelt wird, um von dort geeignete Maßnahmen gegen den Diebstahlversuch einzuleiten, z.B. fernausgelöstes Aktivieren einer elektronischen Wegfahrsperre und/oder Verfolgung des Fahrzeugs mittels eines entsprechenden Ortungssystems. Derartige Systeme sind z.B. in den Offenlegungsschriften DE 39 26 983 A1, DE 42 03 865 A1, EP 0 388 756 A2 und WO 93/24911 sowie den Patentschriften EP 0 366 378 B1 und DE 42 43 415 C1 offenbart. In diesen Druckschriften sind zudem verschiedene, gängige Fahrzeugzustandsüberwachungsmittel beschrieben, von denen vorzugsweise jeweils mehrere vorgesehen sind, um das Fahrzeug sowohl hinsichtlich Aufbruchsversuchen als auch hinsichtlich Wegfahr- und/oder Abtransportversuchen zu überwachen.

In allen dort angegebenen Systemen wird die Diebstahlmeldeinformation jeweils bereits dann erzeugt, wenn der Signalzustand eines von vorzugsweise mehreren fahrzeugzustandsindikativen Signalen einen Diebstahlversuch, z.B. einen Aufbruchversuch, einen Wegfahrversuch oder einen Abtransportversuch, anzeigt. Die erzeugte Diebstahlmeldeinformation löst hierbei den fahrzeugseitigen Alarm aus und wird gleichzeitig über die drahtlose Übertragungsstrecke an die räumlich entfernte Überwachungsstelle weitergeleitet. Eine Fehlfunktion eines der Fahrzeugzustandsüberwachungsmittel, die zur fehlerhaften Erzeugung des diebstahlerkennenden Signalzustandes für das betreffende fahrzeugzustandsindikative Signal führt, hat damit unerwünschterweise zur Folge, daß die Überwachungsstelle fälschlicherweise auf einen Diebstahlfall schließt und die entsprechenden Gegenmaßnahmen einleitet. Es besteht daher Bedarf an einer verbesserten Zuverlässigkeit der Diebstahlerkennung.

Bei einem in der Offenlegungsschrift EP 0 641 693 A1 beschriebenen Diebstahlalarmsystem ist eine selektive Aktivierung und Deaktivierung verschiedener Systemkomponenten möglich. Außerdem sind spezifische Zeitverzögerungen für die Übertragung diebstahlbezogener Sensorsignale vorgesehen, um eine Datenübertragung über einen gemeinsamen Übertragungskanal ohne Datenkollisionen zu erleichtern und um in den dadurch geschaffenen Zeiträumen Handlungen zum Nachweis eines berechtigten Fahrzeugzugangs bzw. einer berechtigten Fahrzeugnutzung vornehmen zu können. Derartige Zeiträume zum Nachweis der Nutzungsberechtigung sind auch bei einem in der Patentschrift DE 44 16 118 C1 beschriebenen Verfahren zum Entriegeln einer aktivierten elektronischen Wegfahrsperre vorgesehen.

Die GB 2 012 092 A beschreibt eine Vorrichtung zur Diebstahlmeldung für ein Kraftfahrzeug mit einer Mehrzahl von Fahrzeugzustandsüberwachungsmitteln, die fahrzeugzustandsindikative Signale abgeben. Zur Erzeugung einer Diebstahlmeldung werden mindestens zwei fahrzeugzustandsindikative Signale mittels einem UND-Schaltkreis verknüpft, wobei die Diebstahlmeldung nur erzeugt wird, wenn die mindestens zwei fahrzeugzustandsindikativen Signale zeitgleich oder innerhalb eines vorgegebenen Zeitintervalls vorliegen.

Der Erfindung liegt als technisches Problem die Bereitstellung eines Verfahrens und einer Vorrichtung der eingangs genannten Art zugrunde, mit denen eine vergleichsweise fehlalarmsichere Diebstahlmeldung, insbesondere bei Bedarf auch zur Diebstahlmeldung an eine vom Fahrzeug räumlich entfernt angeordnete Überwachungsstelle, ermöglicht wird.

Die Erfindung löst dieses Problem durch die Bereitstellung eines Verfahrens mit den Merkmalen des Anspruchs 1 sowie einer Vorrichtung mit den Merkmalen des Anspruchs 5. Mit diesem Verfahren und dieser zur Durchführung desselben geeigneten Vorrichtung wird eine erhöhte Fehlersicherheit bezüglich der Diebstahlerkennung dadurch erzielt, daß die Diebstahlmeldeinformation nur erzeugt wird, wenn die Signalzustände mehrerer fahrzeugzustandsindikativer Signale in einer von einer oder mehreren vorgegebenen Diebstahlmeldekombinationen vorliegen. Dabei besteht jede solche Diebstahlmeldekombination aus einer oder mehreren, in bestimmter zeitlicher Abfolge aufeinanderfolgenden Meldebedingungen, die ihrerseits aus einer oder mehreren, diebstahlindikativen Kombinationen zusammen abgefragter Signalzustände der fahrzeugzustandsindikativen Signale bestehen.

Auf diese Weise erfolgt eine Diebstahlmeldung nur dann, wenn die entsprechenden, diebstahlindizierenden Signalzustände mehrerer fahrzeugzustandsindikativer Signale in einer richtigen gleichzeitigen Kombination und/oder in einer richtigen zeitlichen Abfolge auftreten. Wenn nur ein fahrzeugzustandsindikatives Signal seinen diebstahlindikativen Signalzustand einnimmt, führt dies noch nicht zu einer Diebstahlmeldung, das vorliegende System ist folglich einfehlersicher. Zudem führen auch Mehrfachfehler nicht automatisch zu einer fehlerhaften Diebstahlmeldung, sondern nur in dem sehr unwahrscheinlichen Fall, in welchem dadurch zufällig eine der vorgegebenen Diebstahlmeldekombinationen für die Signalzustände der fahrzeugzustandsindikativen Signale entsteht. Da zudem das gleichzeitige Auftreten mehrerer Signalfehler schon an sich relativ unwahrscheinlich ist, ergibt sich, daß das erfindungsgemäße Verfahren und die erfindungsgemäße Vorrichtung eine sehr zuverlässige, fehlersichere Diebstahlmeldung ermöglichen.

Ein nach Anspruch 2 weitergebildetes Verfahren ermöglich zuverlässig die Meldung eines Diebstahlfalls, bei welchem nach unbefugtem Abschleppen oder Zutritt zum Fahrzeug versucht wird, dasselbe unbefugterweise unter Umgehung einer elektronischen Wegfahrsperre durch Ersatz wenigstens eines fahrzeugbetriebsrelevanten Steuergerätes, z.B. des Motorsteuergerätes, durch ein Fremdsteuergerät in Betrieb zu setzen.

Ein nach Anspruch 3 weitergebildetes Verfahren eignet sich besonders zur Erkennung eines Diebstahlfalls, bei welchem unbefugterweise versucht wird, das Fahrzeug durch Aufladen und Abtransportieren zu entwenden.

Ein nach Anspruch 4 weitergebildetes Verfahren eignet sich besonders zur Erkennung eines Diebstahlfalls, bei dem unberechtigterweise versucht wird, das Fahrzeug durch Abschleppen zu entwenden.

Vorteilhafte Ausführungsformen der Erfindung sind in den Zeichnungen dargestellt und werden nachfolgend beschrieben. Hierbei zeigen:
- Fig. 1: ein schematisches Blockdiagramm einer Vorrichtung zur fehlersicheren Meldung speziell von Diebstahlversuchen eines Kraftfahrzeuges unter Einsatz eines Fremdsteuergerätes,
- Fig. 2: ein schematisches Blockdiagramm einer Vorrichtung zur fehlersicheren Meldung speziell von Diebstahlversuchen eines Kraftfahrzeuges durch Aufladen und Abtransportieren und
- Fig. 3: ein schematisches Blockdiagramm einer Vorrichtung zur fehlersicheren Meldung speziell von Diebstahlversuchen eines Kraftfahrzeuges durch Abschleppen.

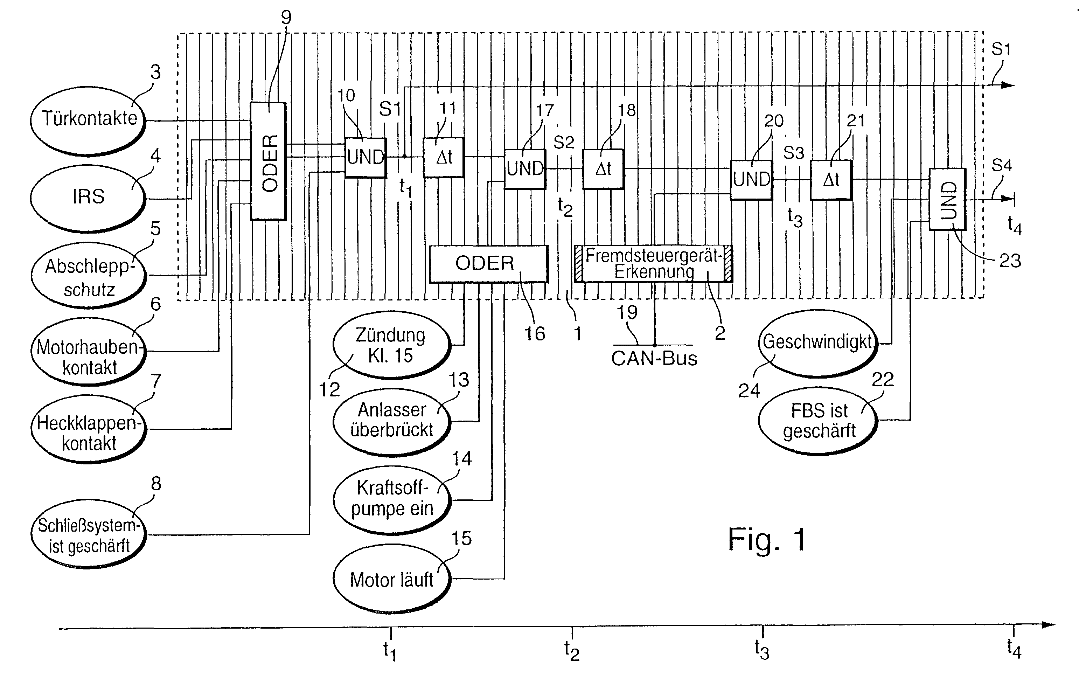

Die in den Figuren 1 bis 3 gezeigten Vorrichtungen leisten eine fehlersichere Meldung unterschiedlicher Fälle von Diebstahlsversuchen, wobei in einem jeweiligen Kraftfahrzeug nur eine oder eine beliebige Kombination der drei Vorrichtungen realisiert sein kann. Vorzugsweise sind alle drei gezeigten Vorrichtungen als Teile einer gemeinsamen Vorrichtung realisiert, mit der sich somit alle der von den drei Einzelvorrichtungen erkennbaren Arten von Diebstahlversuchen abdecken lassen. In diesem Fall sind die Figuren 1 bis 3 als verschiedene Teilaspekte ein und derselben Vorrichtung aufzufassen.

In den Figuren 1 bis 3 stellt der liniert unterlegte, gestrichelt umrahmte Funktionsblock eine Rechnereinheit 1 mit verschiedenen Schnittstellen dar. Im einfachsten Fall bestehen die Eingangsschnittstellen aus digitalen Schnittstellen, an denen ein jeweiliges fahrzeugzustandsindikatives Signal mit einem digitalen Signalzustand anliegt, der das Vorliegen bzw. Nichtvorliegen eines eventuellen Diebstahlversuchs indiziert. Ein Beispiel hierfür sind die Signale von Türkontaktsensoren 3, die anzeigen, ob die betreffende Fahrzeugtür geöffnet wird oder geschlossen ist. In bestimmten anderen Fällen sind komplexe Schnittstellen vorzusehen, beispielsweise zur Erkennung eines Fremdsteuergerätes, wofür ein verschlüsseltes Telegramm, welches ein vorhandenes Fremdnutzungsschutzsystem, nachfolgend auch Fahrberechtigungssystem genannt, mit dem betreffenden Steuergerät austauscht, dekodiert und auf Richtigkeit bewertet wird. Über einen ersten Signalausgang gibt die Rechnereinheit 1 ein Alarmsignal S1 ab, mit dem ein fahrzeugseitiges Diebstahlalarmsystem ausgelöst werden kann. Über einen zweiten Ausgang gibt die Rechnereinheit 1 ein Diebstahlmeldesignal S4 ab, das über eine drahtlose Fernübertragungsstrecke an eine räumlich entfernte Überwachungsstelle übermittelt werden kann, die bei einem gemeldeten Diebstahlversuch entsprechende Ortungs- und/oder Stillegungsmaßnahmen herkömmlicher Art ausführt. Die gezeigten Vorrichtungen nach den Figuren 1 bis 3 sind in der Lage, die seit dem Einsatz elektronischer Wegfahrsperren, welche einen Diebstahl eines Fahrzeugs auf eigener Achse ohne Besitz von Originalschlüsseln praktisch ausschließen, noch am meisten relevanten Diebstahlsszenarien zu erkennen, und zwar die Umgehung bzw. den Ausbau betriebsrelevanter Fahrzeugsteuergeräte, insbesondere des Motorsteuergerätes, das Aufladen und Abtransportieren des Fahrzeugs bzw. das Abschleppen desselben.

Zur Signalauswertung enthält die Rechnereinheit 1 verschiedene logische UND- sowie ODER-Elemente und Δt-Zeitverzögerungselemente. Mit den logischen UND- sowie ODER-Elementen sind nicht nur einfache logische Verknüpfungen der betreffenden Art von mehreren digitalen Signalen, sondern auch logische Verknüpfungen auf einem höheren Abstraktionsgrad gemeint. Beispielsweise soll das in Fig. 1 gezeigte logische Element Fremdsteuergeräterkennung 2 dazu dienen, durch Abfrage und Dekodieren eines verschlüsselten Dialoges zwischen dem Motorsteuergerät und dem Fremdnutzungsschutzsystem zu erkennen, ob das Originalsteuergerät nicht mehr aktiv, dieses also durch ein Fremdsteuergerät ersetzt wurde. Dieser komplexe Abfragevorgang resultiert dann in der digitalen Information "Fremdsteuergerät vorhanden" oder nicht. Bei den Δt-Verzögerungselementen handelt es sich primär nicht um übliche Verzögerungsglieder, sondern um die symbolische Darstellung des zeitlichen Auftretens der jeweiligen Signale. Die logischen Verknüpfungselemente und die Δt-Verzögerungselemente können außer in Hardware jedenfalls teilweise auch in Software in der Rechnereinheit 1 realisiert sein. Bei Bedarf können die logischen Verknüpfungselemente und die Δt-Verzögerungselemente auch durch eine Fuzzy-Logik ersetzt sein, wobei dann am Ende der Entscheidungskette eine Schwellenlogik steht, die ab einer vorgegebenen Wahrscheinlichkeitsschwelle von z.B. größer als 98% eine Diebstahlmeldeinformation abgibt.

Die gezeigten ovalen Funktionsblöcke außerhalb der Rechnereinheit 1 stellen die jeweils vorhandenen verschiedenen Fahrzeugzustandsüberwachungsmittel dar, die jeweils ein fahrzeugzustandsindikatives Signal an die Rechnereinheit 1 abgeben. Neben einer kontaktgesteuerten Außenhautabsicherungssensorik 3, 6, 7, die den Schließzustand der verschiedenen öffnungsfähigen Fahrzeugaußenhautelemente, wie Fahrzeugtüren, Motorhaube und Heckklappe, überwacht, einem Innenraumschutzsensor 4, z.B. in Form einer Ultraschall-Überwachungseinheit, und einem herkömmlichen Abschleppschutz 5 umfaßt die vorgesehene Sicherungssensorik als Teil der Fahrzeugzustandsüberwachungsmittel auch einen Bewegungsmelder, der eine Drehratensensorik 25, eine Beschleunigungssensorik, eine Raddrehimpulsauswerteeinheit 30, z.B. eines Antiblockiersystems, und/oder eine intelligente Verknüpfungseinheit zur Bewertung der betreffenden Einzelsignale beinhaltet, die beispielsweise durch elektronische Rechenschaltungen und/oder einen Mikrocontroller realisiert sein kann. Des weiteren kann die Fahrzeugposition mittels eines Ortungssystems 31, z.B. anhand eines GPS-Empfängers, und damit auch die absolute Fahrzeuggeschwindigkeit im Raum überwacht werden.

Im folgenden wird auf die Funktionen der Vorrichtungen gemäß Figuren 1 bis 3 im einzelnen eingegangen, wobei in jeder Figur die für jeweilige Funktionalität relevanten Komponenten entlang eines Zeitstrahls t geordnet angegeben sind, um die zeitliche Abfolge aufeinanderfolgender Meldebedingungen zu symbolisieren, die Voraussetzung für die Erzeugung des Diebstahlmeldesignals S4 sind.

Die Vorrichtung von Fig. 1 dient speziell dazu, einen Diebstahl zu melden, bei dem versucht wird, das Fahrzeug aufzubrechen oder abzuschleppen und anschließend unter Verwendung eines oder mehrerer Fremdsteuergeräte zwecks Umgehung der elektronischen Wegfahrsperre in Betrieb zu setzen. Zunächst erfaßt die Rechnereinheit 1 als eine erste Meldebedingung, ob das Fahrzeug bei aktivierter Fahrzeugzugangsschutzeinrichtung, d.h. geschärftem Schließsystem, abgeschleppt oder aufgebrochen wird. Hierzu werden die Ausgangssignale einer Türkontaktsensorik 3, eines Innenraumschutzsystems 4, eines Abschleppschutzes 5, eines Motorhaubenkontaktes 6 und eines Heckklappenkontaktes 7 erfaßt und in der Rechnereinheit 1 einer ODER-Verknüpfung 9 unterzogen. Das resultierende Signal wird mit einem den Zustand des Schließsystems 8 repräsentierenden Signal einer UND-Verknüpfung 10 unterzogen, wodurch zu einem Zeitpunkt t₁ ein erstes Meldebedingungssignal S1 vorliegt, das einen Diebstahlversuch indiziert, wenn das Schließsystem aktiviert war und wenigstens eines der ODERverknüpften, fahrzeugzutrittsindikativen Signale der Einheiten 3 bis 7 einen diebstahlindikativen Signalzustand besitzt.

Dieses erste Meldebedingungssignal wird unmittelbar als Alarmauslösesignal S1 verwendet, um die fahrzeugseitige Alarmanlage auszulösen, da eine erhöhte Fehlersicherheit für diese Alarmauslösung nicht unbedingt erforderlich ist. Die Berücksichtigung des Zustands des Schließsystems 8 durch diese UND-Verknüpfung 10 verhindert, daß bereits beim berechtigten Öffnen der Fahrzeugtüren das Alarmsignal S1 erzeugt wird. Außerdem erkennt die Rechnereinheit 1 einen eventuellen Ausbau des Schließsystems 8 und erzeugt dann ebenfalls das Alarmsignal S1. Wenn sich das Schließsystem 8 aufgrund eines technischen Defekts nicht deaktivieren läßt, es aber auszutauschen ist, kann hierzu beispielsweise eine entsprechende Meldung an die Überwachungsstelle gemacht werden, die dann ein Abschleppen des Fahrzeugs in eine Werkstatt zuläßt.

In einem anschließenden Zeitraum, veranschaulicht durch ein entsprechendes Δt-Verzögerungselement 11, wird abgefragt, ob ein Versuch vorliegt, das Fahrzeug in Betrieb zu setzen, wozu die Zündleitung 12, eine Anlasserleitung 13, die Kraftstoffpumpe 14 und der Fahrzeugmotor 15 hinsichtlich ihres Betriebszustands abgefragt werden. Die vier zugehörigen fahrzeugzustandsindikativen Signale werden in der Rechnereinheit 1 einer ODER-Verknüpfung 16 unterzogen. Das daraus resultierende Signal wird dann mit dem ersten Meldebedingungssignal S1 einer UND-Verknüpfung 17 unterzogen, so daß zu einem Zeitpunkt t₂ ein entsprechendes zweites Meldebedingungssignal S2 vorliegt. Dabei besitzen die Δt-Verzögerungselemente im allgemeinen auch Speichereigenschaften, so daß z.B. das zweite Meldebedingungssignal S2 nach einem Fahrzeugaufbruchversuch auch dann noch seinen diebstahlindikativen Signalzustand beibehält, wenn eine zuvor aufgebrochene Fahrzeugtür bereits wieder geschlossen wurde.

In einem anschließenden Zeitraum, wiederum symbolisiert durch ein entsprechendes Δt-Verzögerungselement 18, wird von der Rechnereinheit 1 geprüft, ob unzulässigerweise ein Fremdsteuergerät, z.B. ein fremdes Motorsteuergerät, eingebaut wurde. Dazu tastet die Rechnereinheit 1 die Datenbusleitung 19 eines im Fahrzeug vorhandenen Datenbusses, z.B. eines CAN-Busses, zwischen dem entsprechenden, in die elektronische Wegfahrsicherung einbezogenen Steuergerät und dem Fahrberechtigungssystem selbst nach den zwischen diesen ausgetauschten, verschlüsselten Berechtigungsdaten ab, um daraus zu erkennen, ob das ursprüngliche Originalsteuergerät oder jedenfalls ein berechtigtes Ersatzsteuergerät durch ein unberechtigtes Fremdsteuergerät ersetzt wurde. Beispielsweise wird ein berechtigt eingebautes Ersatz-Motorsteuergerät in herkömmlicher Weise mittels eines transportablen Handtestgerätes angelernt und verhält sich dann identisch wie das vormalige Original-Motorsteuergerät. Falls ausnahmsweise das Fahrberechtigungssystem in seinem aktivierten, d.h. geschärften Zustand ausfällt, kann der Austausch in einer Werkstatt unter vorherigem Abschleppen des Fahrzeugs erfolgen. Ein solches Abschleppen kann der Überwachungsstelle in einem besonderen Meldemodus angezeigt werden, die daraufhin den Abschleppvorgang zuläßt, ohne ihn als Diebstahlversuch zu werten. Das aus der Fremdsteuergeräterkennung 2 resultierende, digitale Signal, welches die Information enthält, ob wenigstens ein Fremdsteuergerät eingesetzt wurde, wird dann mit dem zweiten Meldebedingungssignal S2 einer UND-Verknüpfung 20 unterzogen, woraus sich zu einem Zeitpunk t₃ ein drittes Meldebedingungssignal S3 ergibt.

In einem anschließenden Zeitraum, wiederum symbolisiert durch ein entsprechendes Δt-Verzögerungselement 21, wird dann von der Rechnereinheit 1 kontrolliert, ob das Fahrberechtigungssystem 22 aktiviert ist bzw. jedenfalls vor Einbau eines Fremdsteuergerätes aktiviert war. Das entsprechende Informationssignal wird mit dem dritten Meldebedingungssignal S3 einer UND-Verknüpfung 23 unterzogen. Das daraus resultierende Signal stellt das von der Rechnereinheit 1 zu einem Zeitpunkt t₄ abgegebene Diebstahlmeldesignal S4 dar, das der nicht gezeigten, zentralen Überwachungsstelle außerhalb des Fahrzeugs über eine drahtlose Übertragungsstrecke weitergeleitet wird. Ersichtlich ist das Diebstahlmeldesignal S4 in hohem Maße fehlergesichert, da es nur dann einen Diebstahlversuch anzeigt, wenn die Signalzustände der verschiedenen oben erwähnten, der Rechnereinheit 1 zugeführten fahrzustandsindikativen Signale in ganz bestimmten Diebstahlmeldekombinationen vorliegen, wie sie durch die ODER- und die UND-Verknüpfungen sowie durch die richtige zeitliche Reihenfolge charakterisiert sind, wie sie durch die verschiedenen Δt-Verzögerungselemente symbolisiert wird.

Einzelne Signalfehlauslösungen führen allenfalls zur Erzeugung des Signals S1 zur Aktivierung eines fahrzeugseitigen Alarms, jedoch nicht zur Weitermeldung eines Diebstahlversuchs an die räumlich entfernte Überwachungsstelle, welche im gemeldeten Diebstahlfahl die weitreichenden Ortungs- und Fahrzeugstillegungsmaßnahmen einleitet. Zur weiter erhöhten Fehlersicherheit des zugehörigen Diebstahlmeldesignals S4 kann für die letzte, dieses Signal S4 bereitstellende UND-Verknüpfung 23 optional zusätzlich das Signal einer Fahrzeuggeschwindigkeitssensorik 24 berücksichtigt werden, wie in Fig. 1 gestrichelt angedeutet, so daß die Diebstahlmeldeinformation S4 dann nur unter der Zusatzbedingung erzeugt wird, daß sich das Fahrzeug mit einer gewissen Mindestgeschwindigkeit bewegt.

Um Wartungsarbeiten durch autorisiertes Wartungspersonal problemlos zu ermöglichen, ohne daß dadurch fälschlicherweise das Diebstahlmeldesignal S4 erzeugt wird, kann bei Bedarf ein Service-Schlüssel vorgesehen werden, der dem autorisierten Personal ausgehändigt wird und der nach Einstecken in das Zündschloß von der Rechnereinheit 1 erkannt wird, die dann die Absendung dieses Signals S4 unterdrücken oder zusammen mit diesem Signal S4 eine Zusatzinformation abgeben kann, mit der die Überwachungsstelle erkennen kann, daß es sich um eine autorisierte Manipulation am Fahrzeug handelt.

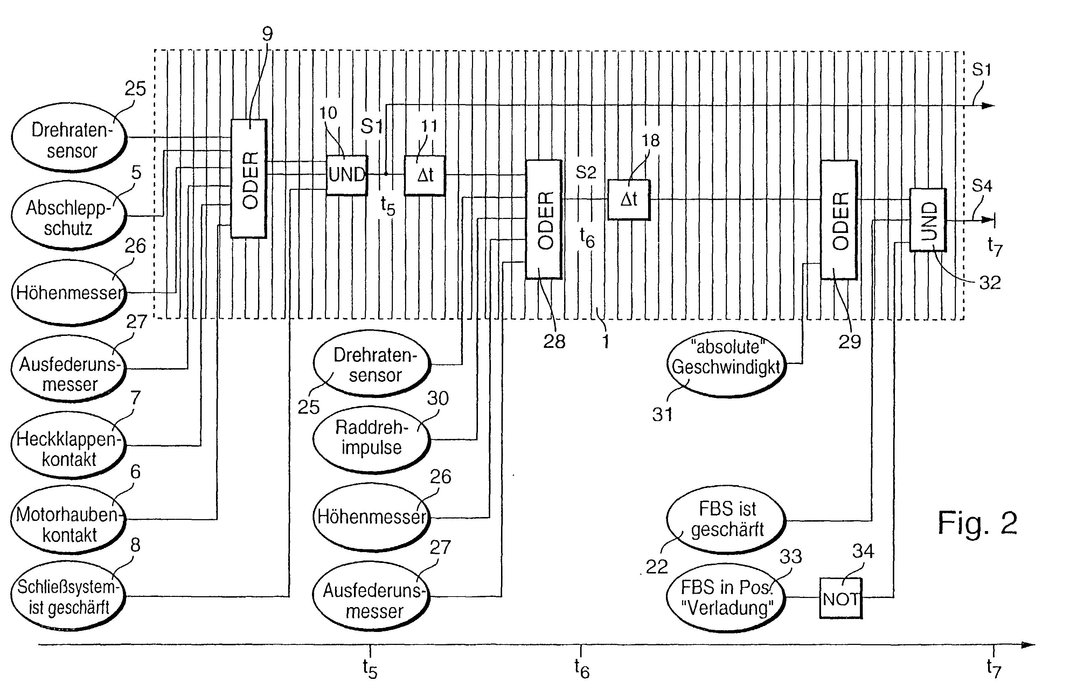

Die in Fig. 2 gezeigte Vorrichtung dient insbesondere dazu, das unberechtigte Aufladen und Abtransportieren eines Fahrzeugs als Diebstahlversuch fehlersicher zu melden. Soweit die Vorrichtung funktionell gleiche Komponenten wie die Vorrichtung von Fig. 1 enthält, sind gleiche Bezugszeichen verwendet, und es kann bezüglich dieser Komponenten auf die obige Beschreibung von Fig. 1 verwiesen werden. Wie gesagt, können die beiden Vorrichtungen auch zu einer gemeinsamen Vorrichtung integriert sein.

Im Fall von Fig. 2 wird zur Erzeugung des ersten Meldebedingungssignals S1 zu einem Zeitpunkt t₅ das Zustandssignal des Schließsystems 8 in der UND-Verknüpfung 10 mit dem Ausgangssignal der ODER-Verknüpfung 9 verbunden, der hierbei als fahrzeugzustandsindikative Signale diejenigen einer Drehratensensorik 25, des Abschleppschutzes 5, eines Höhenmessers 26, eines Ausfederungsmessers 27 sowie des Heckklappenkontaktes 7 und des Motorhaubenkontaktes 6 zugeführt sind. Ist eine dieser ODER-Bedingungen bei geschärftem Schließsystem 8 erfüllt, nimmt das erste Meldebedingungssignal S1 seinen diebstahlindikativen Signalzustand an, wodurch wiederum der fahrzeugseitige Alarm ausgelöst wird. In diesem Fall zeigt das erste Meldebedingungssignal S1 speziell einen Fahrzeugaufladevorgang an.

Im anschließenden Zeitraum, symbolisiert durch das Δt-Verzögerungselement 11, wird das erste Meldebedingungssignal S1 in einer ODER-Verknüpfung 28 mit den Signalen der Drehratensensorik 25, einer Raddrehzahlsensorik 30, des Höhenmessers 26 und des Ausfederungsmessers 27 unterzogen, wobei durch die vier letztgenannten Signale ein Verladen des Fahrzeugs erkannt werden kann. Aus dieser ODER-Verknüpfung 28 resultiert das zweite Meldebedingungssignal S2 zu einem Zeitpunkt t₆.

Im anschließenden Zeitraum, symbolisiert durch das Δt-Verzögerungselement 18, wird das zweite Meldebedingungssignal S2 einer ODER-Verknüpfung 29 mit dem Ausgangssignal eines GPS-Empfängers 31 unterzogen, welches eine Information über die absolute Fahrzeugbewegungsgeschwindigkeit im Raum enthält. Die ODER-Verknüpfung 29 bewirkt, daß eine Diebstahlmeldung auch dann erfolgt, wenn diese absolute Bewegungsgeschwindigkeit eine vorgegebene Mindestgeschwindigkeit überschreitet. Das resultierende Signal der ODER-Verknüpfung 29 wird dann zur Erzeugung des Diebstahlmeldesignals S4 zu einem Zeitpunkt t₇ mit zwei weiteren Signalen einer UND-Verknüpfung 32 unterzogen, von denen das eine Signal den Zustand des Fahrberechtigungssystems 22 und das andere Signal angibt, ob sich das Fahrberechtigungssystem 22 in einem Verladungs-Betriebsmodus 33 befindet. Dieser Betriebsmodus ist für das Fahrberechtigungssystem 22 vorgesehen, um einen autorisierten Bahn- oder Schiffstransport des Fahrzeugs zu ermöglichen, ohne das Diebstahlmeldesignal S4 auszulösen. Das zu dem Verladungs-Betriebsmodus 33 gehörige Zustandssignal wird in einem Inverter 34 vor der Zuführung zur UND-Verknüpfung 32 invertiert.

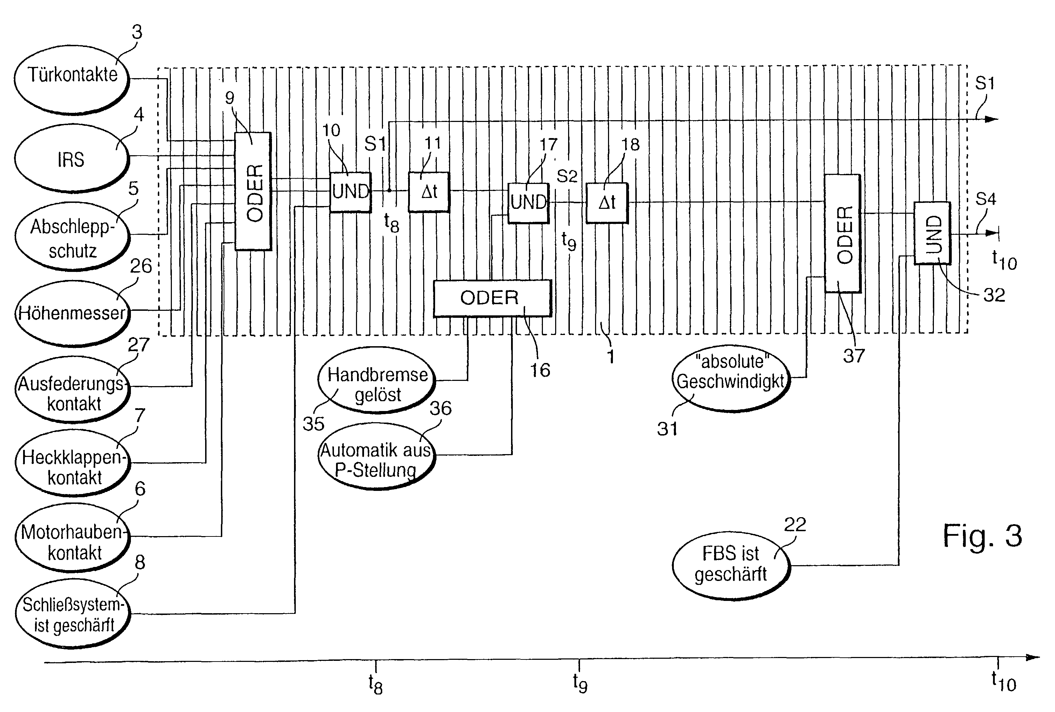

Die in Fig. 3 gezeigte, wiederum separat oder als weiterer Bestandteil der Vorrichtungen der Fig. 1 und/oder 2 realisierbare Vorrichtung ermöglicht speziell die Erkennung von Diebstahlversuchen mittels eines Abschleppvorgangs. Funktionell gleiche Komponenten wie in den Vorrichtungen 1 und 2 sind wiederum mit denselben Bezugszeichen versehen, und es kann zu ihrer Erläuterung auf die Beschreibung der Figuren 1 und 2 verwiesen werden. Bei der Vorrichtung von Fig. 3 werden in der eingangsseitigen ODER-Verknüpfung 9 der Rechnereinheit 1 die Signale der Türkontakte 3, des Innenraumschutzes 4, des Abschleppschutzes 5, des Höhenmessers 26, des Ausfederungsmessers 27, des Heckklappenkontaktes 7 und des Motorhaubenkontaktes 6 verknüpft, um zu erkennen, ob das Fahrzeug aufgebrochen wurde und/oder sich jemand im Fahrzeuginnenraum bewegt und/oder das Fahrzeug angehoben wurde. Durch die anschließende UND-Verknüpfung 10 des resultierenden ODER-Signals mit dem Zustandssignal des Schließsystems 8 wird dann wiederum das erste Meldebedingungssignal S1 zu einem Zeitpunkt t₈ als diebstahlindikatives Signal erzeugt, das den fahrzeugseitigen Alarm auslöst.

Im Zeitraum nach Erzeugung des ersten Meldebedingungssignals S1, symbolisiert durch das Δt-Verzögerungselement 11, wird das erste Meldebedingungssignal S1 der UND-Verknüpfung 17 mit dem Ausgangssignal der ODER-Verknüpfung 16 unterzogen, bei der in diesem Fall das Zustandssignal einer Handbremse 35 mit dem Zustandssignal eines Automatikgetriebes 36 ODER-verknüpft wird. Das Lösen der Handbremse bzw. das Herausbewegen des Automatikgetriebes aus seiner P-Stellung indizieren hierbei einen Abschleppvorgang.

Durch die UND-Verknüpfung 17 wird das zweite Meldebedingungssignal S2 zu einem Zeitpunkt t₉ erzeugt, das dann im anschließenden Zeitraum, symbolisiert durch das Δt-Verzögerungselement 18, mit dem Absolutbewegungssignal des GPS-Empfängers 31 einer ODER-Verknüpfung 37 unterzogen wird, um eine Diebstahlmeldung bei Auftreten des diebstahlindikativen Signalzustands für wenigstens eines dieser beiden Signale zu bewirken. Das aus der ODER-Verknüpfung 37 resultierende Signal wird dann in der anschließenden UND-Verknüpfung 32 mit dem Zustandssignal des Fahrberechtigungssystems 22 zur Erzeugung des Diebstahlmeldesignals S4 zu einem Zeitpunkt t₁₀ verknüpft.

Insgesamt ergibt sich aus der obigen Beschreibung der drei Vorrichtungen, die vorzugsweise verschiedene Teilaspekte einer gemeinsamen Vorrichtung darstellen, daß erfindungsgemäß die vorzugsweise an eine räumlich entfernte Überwachungsstelle übermittelte Diebstahlmeldeinformation sehr fehlersicher erzeugt wird.

Es versteht sich, daß neben den speziell gezeigten und beschriebenen, zur Erzeugung der Diebstahlmeldeinformation führenden Diebstahlmeldekombinationen der Signalzustände der unterschiedlichen fahrzeugzustandsindikativen Signale je nach Anwendungsfall nur ein Teil dieser Signale und/oder weitere, hier nicht gezeigte, fahrzeugsicherungsrelevante Signale und/oder andere Kombinationen der gezeigten logischen Signalverknüpfungen und modifizierte zeitliche Abfolgen der einzelnen Meldebedingungssignale verwendet werden können, um die Diebstahlmeldeinformation fehlersicher zu erzeugen. Gegebenenfalls kann auch die fehlersichere Erzeugung des den fahrzeugseitigen Alarm auslösenden Signals vorgesehen sein, indem beispielsweise das gezeigte Diebstahlmeldesignal S4 statt des ersten Meldebedingungssignals S1 zur Auslösung des fahrzeugseitigen Alarms herangezogen wird.

## Patentansprüche

1. Verfahren zur Diebstahlmeldung für ein Kraftfahrzeug, bei dem
- eine Diebstahlmeldeinformation (S4) in Abhängigkeit vom Signalzustand wenigstens eines von mehreren fahrzeugzustandsindikativen Signalen erzeugt wird,
- wobei die Diebstahlmeldeinformation (S4) nur erzeugt wird, wenn die Signalzustände mehrerer der fahrzeugzustandsindikativen Signale in einer von einer oder mehreren vorgegebenen Diebstahlmeldekombinationen vorliegen, und
- wobei jede Diebstahlmeldekombination aus einer oder mehreren, in bestimmter zeitlicher Abfolge aufeinanderfolgenden Meldebedingungen (S1, S2, S3) besteht, die ihrerseits aus einer oder mehreren diebstahlindikativen Kombinationen zusammen abgefragter Signalzustände zugehöriger fahrzeugzustandsindikativer Signale bestehen.

2. Verfahren nach Anspruch 1, weiter
**dadurch gekennzeichnet, dass**
die Diebstahlmeldeinformation (S4) erzeugt wird, wenn
a) ein diebstahlindikativer Signalzustand von einer Türkontaktsensorik (3), einer Innenraumschutzsensorik (4), einer Abschleppschutzsensorik (5), einer Motorhaubenstellungssensorik (6) oder einer Heckklappenstellungssensorik (7) bei geschärftem Schließsystem (8) vorliegt und anschließend
b) ein diebstahlindikativer Signalzustand von einer Zündleitung (12), einer Anlasserleitung (13), einer eingeschalteten Kraftstoffpumpe (14) oder eines laufenden Motors (15) vorliegt und anschließend
c) ein diebstahlindikativer Signalzustand einer Fremdsteuergeräterkennung (2) vorliegt und anschließend
d) ein vorhandenes, geschärftes Fahrberechtigungssystem (22) verifiziert und optional das Überschreiten einer vorgegebenen Mindestgeschwindigkeit durch das Fahrzeug erkannt wird.

3. Verfahren nach Anspruch 1 oder 2, weiter
**dadurch gekennzeichnet, dass**
die Diebstahlmeldeinformation (S4) erzeugt wird, wenn
a) ein diebstahlindikativer Signalzustand von einer Drehratensensorik (25), einer Abschleppschutzsensorik (5), einem Höhenmesser (26), einem Ausfederungsmesser (27), einer Heckklappenstellungssensorik (7) oder einer Motorhaubenstellungssensorik (6) bei geschärftem Schließsystem (8) vorliegt und anschließend
b) ein diebstahlindikativer Signalzustand von der Drehratensensorik (25), einer Raddrehzahlsensorik (30), dem Höhenmesser (26) oder dem Ausfederungsmesser (27) vorliegt oder
c) alternativ zu den Bedingungen a) und b) die absolute Fahrzeugbewegungsgeschwindigkeit im Raum über einer vorgegebenen Mindestgeschwindigkeit liegt und
d) zusätzlich zu den Bedingungen von a) und b) oder von c) ein vorhandenes Fahrberechtigungssystem (22) geschärft ist und sich nicht in einem Verladungs-Betriebsmodus befindet.

4. Verfahren nach einem der Ansprüche 1 bis 3, weiter
**dadurch gekennzeichnet, dass**
die Diebstahlmeldeinformation (S4) erzeugt wird, wenn
a) ein diebstahlindikativer Signalzustand von einer Türkontaktsensorik (3), einer Innenraumschutzsensorik (4), einer Abschleppschutzsensorik (5), einem Höhenmesser (26), einem Ausfederungsmesser (27), einer Heckklappenstellungssensorik (7) oder einer Motorhaubenstellungssensorik (6) bei geschärftem Schließsystem (8) vorliegt und anschließend
b) ein diebstahlindikativer Signalzustand hinsichtlich einer gelösten Handbremse (35) oder eines aus seiner P-Stellung herausbewegten Automatikgetriebes (36) vorliegt oder
c) alternativ zu den Bedingungen a) und b) die absolute Fahrzeugbewegungsgeschwindigkeit im Raum über einer vorgegebenen Mindestgeschwindigkeit liegt und
d) zusätzlich zu den Bedingungen von a) und b) oder von c) ein vorhandenes, geschärftes Fahrberechtigungssystem (22) vorliegt.

5. Vorrichtung zur Diebstahlmeldung für ein Kraftfahrzeug, mit
- einer Mehrzahl von Fahrzeugzustandsüberwachungsmitteln, die fahrzeugzustandsindikative Signale abgeben, und
- einer Rechnereinheit (1), die eine Diebstahlmeldeinformation (S4) in Abhängigkeit vom Signalzustand wenigstens eines der fahrzeugzustandsindikativen Signale erzeugt,
- wobei die Rechnereinheit (1) so ausgelegt ist, dass sie die Diebstahlmeldeinformation (S4) nur erzeugt, wenn die Signalzustände mehrerer der fahrzeugzustandsindikativen Signale in einer von einer oder mehreren vorgegebenen Diebstahlmeldekombinationen vorliegen, wobei jede Diebstahlmeldekombination aus einer oder mehreren, in bestimmter zeitlicher Abfolge aufeinanderfolgenden Meldebedingungen (S1, S2, S3) besteht, die ihrerseits aus einer oder mehreren diebstahlindikativen Kombinationen zusammen abgefragter Signalzustände zugehöriger fahrzeugzustandsindikativer Signale bestehen.

## Claims

1. A process for reporting the theft of a motor vehicle in which
- a theft report message (S4) is generated dependent upon the signal status of at least one of several vehicle status indicating signals,
- the theft report message (S4) being generated only if the signal statuses of several of the vehicle status indicating signals are present in one of one or more predetermined theft report combinations, and
- each theft report combination consisting of one or more report conditions (S1, S2, S3) which follow each other in a given time sequence and which themselves consist of one or more theft indicating combinations of simultaneously requested signal statuses of associated vehicle status indicating signals.

2. A process in accordance with claim 1, further
**characterised in that**
the theft report message (S4) is generated if
a) a theft indicating signal status is present for a door contact sensor system (3), a passenger compartment protection sensor system (4), an anti-towing sensor system (5), a bonnet position sensor system (6) or a boot position sensor system (7) when the locking system (8) is armed and subsequently
b) a theft indicating signal status is present for an ignition cable (12), a starter motor cable (13), an activated fuel pump (14) or a running engine (15) and subsequently
c) a theft indicating signal status of a foreign control device recognition system (2) is present and subsequently
d) an existing, armed drive authorisation system (22) is verified and, optionally, the vehicle recognises that a predetermined minimum speed has been exceeded.

3. A process in accordance with claim 1 or 2, further
**characterised in that**
the theft report message (S4) is generated if
a) a theft indicating signal status is present for an engine speed sensor system (25), an anti-towing sensor system (5), a height sensor (26), a top-out sensor (27), a boot position sensor system (7) or an bonnet position sensor system (6) when the locking system (8) is armed and subsequently
b) a theft indicating signal status is present for the engine speed sensor system (25), a wheel speed sensor system (30), the height sensor (26) or the top-out sensor (27) or
c) alternatively to conditions a) and b), the absolute vehicle speed in space is above a predetermined minimum speed and
d) in addition to the conditions specified in a) and b) or in c), an existing drive authorisation system (22) is armed and is not in transportation mode.

4. A process in accordance with claims I to 3, further
**characterised in that**
the theft report message (S4) is generated if
a) a theft indicating signal status is present for a door contact sensor system (3), a passenger compartment protection sensor system (4), an anti-towing sensor system (5), a height sensor (6), a top-out sensor (27), a boot position sensor system (7) or a bonnet position sensor system-(6) when the locking system (8) is armed and subsequently
b) a theft indicating signal status is present for a released hand brake (35) or an automatic transmission (36) moved from its P position (36) or
c) alternatively to conditions a) and b), the absolute vehicle speed in space is above a predetermined minimum speed and
d) in addition to the conditions specified in a) and b) or in c), an existing drive authorisation system (22) is armed.

5. A device for reporting the theft of a motor vehicle with
- a multiplicity of vehicle status monitoring means which emit vehicle status indicating signals, and
- a computer unit (1) which generates a theft report message (S4) dependent on the signal status of at least one of the vehicle status indicating signals,
- the computer unit (1) being designed in such a manner that it generates the theft report message (S4) only if the signal statuses of several of the vehicle status indicating signals are present in one of one or more predetermined theft report combinations, each theft report combination consisting of one or more report conditions (S1, S2, S3) which follow each other in a given time sequence and which themselves consist of one or more theft indicating combinations of simultaneously requested signal statuses of associated vehicle status indicating signals.

## Revendications

1. Procédé de signalisation du vol d'un véhicule dans lequel
- une information signalant le vol (S4) est produite en fonction de l'état du signal d'au moins l'un de plusieurs signaux indicatifs de l'état du véhicule,
- dans lequel l'information signalant le vol (S4) n'est produite qu'en présence des états du signal de plusieurs des signaux indicatifs de l'état du véhicule dans l'une d'une ou de plusieurs combinaisons des signalisations du vol prescrites, et
- dans lequel chaque combinaison des signalisations du vol est constituée d'une ou de plusieurs conditions justifiant une signalisation (S1, S2, S3) qui se succèdent selon une séquence temporelle déterminée et qui, de leurs côtés, sont constitués d'une ou de plusieurs combinaisons, indicatives du vol, d'états du signal, interrogés ensemble, de signaux indicatifs de l'état du véhicule correspondant.

2. Procédé selon la revendication 1, **caractérisé en outre par le fait que** l'information signalant le vol (S4) est produite lorsque
(a) on est en présence d'un état du signal indicatif du vol provenant d'un circuit détecteur des contacts de porte (3), d'un circuit détecteur de protection de l'habitacle (4) d'un circuit détecteur de protection contre un remorquage (5), d'un circuit détecteur de la position du capot du moteur (6), ou d'un circuit détecteur de la position du hayon (7), le système de fermeture (8) étant activé et qu'ensuite
(b) on est en présence d'un état du signal indicatif du vol provenant d'un conducteur d'allumage (12), d'un conducteur de démarreur (13), d'une pompe à carburant (14) mise en circuit ou d'un moteur (15) qui tourne et qu'ensuite
(c) on est en présence d'un état du signal indicatif du vol provenant du fait qu'est reconnu un appareil de commande étranger (2) et qu'ensuite
(d) un système d'autorisation de rouler (22) existant, activé, et vérifié et, en option, le dépassement, par valeur supérieure, par le véhicule d'une vitesse minimale prescrite sont reconnus.

3. Procédé selon la revendication 1 ou 2, **caractérisé en outre par le fait que** l'information signalant le vol (S4) est produite lorsque
(a) on est en présence d'un état du signal indicatif du vol provenant d'un circuit détecteur de la vitesse de rotation (25), d'un circuit détecteur de protection contre un remorquage (5), d'un appareil de mesure du niveau du plancher (26), d'un appareil de mesure de l'action des amortisseurs (27), d'un circuit détecteur de la position du hayon (7), ou d'un circuit détecteur de la position du capot du moteur (6), système de fermeture (8) activé, et qu'ensuite
(b) on est en présence d'un état du signal indicatif du vol provenant du circuit détecteur de la vitesse de rotation (25), d'un circuit détecteur de la vitesse de rotation des roues (30), du appareil de mesure du niveau du plancher (26) ou du appareil de mesure de l'action des amortisseurs (27) ou
(c) en variante aux conditions a) et b), la vitesse absolue de déplacement du véhicule dans l'espace se situe au-dessus d'une valeur minimale prescrite et
(d) en supplément aux conditions de a) et b) ou de c), un système d'autorisation de rouler (22) existant est activé et ne se trouve pas dans le mode d'exploitation de chargement pour expédition.

4. Procédé selon l'une des revendications 1 à 3, **caractérisé en outre par le fait que** l'information signalant le vol (S4) est produite lorsque
(a) on est en présence d'un état du signal indicatif du vol provenant d'un circuit détecteur des contacts de porte (3), d'un circuit détecteur de protection de l'habitacle (4), d'un circuit détecteur de protection contre un remorquage (5), d'un appareil de mesure du niveau du plancher (26), d'un appareil de mesure de l'action des amortisseurs (27), d'un circuit détecteur de la position du hayon (7) ou d'un circuit détecteur de la position du capot du moteur (6), système de fermeture (8) activé, et qu'ensuite
(b) on est en présence d'un état du signal indicatif du vol concernant un frein à main (35) desserré ou une boîte de vitesses automatique déplacée hors de sa position P ou
(c) en variante aux conditions a) et b), la vitesse absolue de déplacement du véhicule dans l'espace se situe au-dessus d'une valeur minimale prescrite et
(d) en supplément aux conditions de a) et b) ou de c), on est en présence d'un système d'autorisation de rouler (22) existant, activé.

5. Dispositif de signalisation du vol d'un véhicule, comportant
- une pluralité de moyens de surveillance de l'état du véhicule qui émettent des signaux indicatifs de l'état du véhicule, et
- un ordinateur (1) qui produit une information signalant le vol (S4) en fonction de l'état du signal d'au moins l'un des signaux indicatifs de l'état du véhicule,
- dans lequel l'ordinateur (1) est conçu de façon qu'il ne produise l'information signalant le vol (S4) qu'en présence des états du signal de plusieurs des signaux indicatifs de l'état du véhicule dans l'une d'une ou de plusieurs combinaisons des signalisations du vol prescrites, dans lequel chaque combinaison des signalisations du vol est constituée d'une ou de plusieurs conditions justifiant une signalisation qui se succèdent selon une séquence temporelle déterminée et qui, de leurs côtés, sont constitués d'une ou de plusieurs combinaisons, indicatives du vol, d'états du signal, interrogés ensemble, de signaux indicatifs de l'état du véhicule correspondant.
